# EUROPEAN PATENT APPLICATION

(11) **EP 3 216 654 A1**
(43) Date of publication of application: **13.09.2017**
(21) Application number: 17154364.8
(22) Date of filing: 02.02.2017
(51) Int. Cl.: B60R 1/078

(54) **AUXILARY MIRROR**

(30) Priority: 03.02.2016 NL 1041707
(71) Applicant: Oxx Holding Ltd, Kenilworth, Warwickshire CV8 2GY (GB)
(72) Inventor: van Dooren, Adrianus Jacobus Peter, 3723 ES Bilthoven (NL)
(74) Representative: van Dokkum, Willem Gerard Theodoor

(57) **Abstract**

Hulpspiegel (4,14) omvattende een klemblok (8) met klemorganen voor bevestiging op een van een omtreksrand (2) voorziene voertuigspiegel (1), welke klemorganen zijn uitgevoerd met verstelbare klembekken (3-1,3-2) waarmee de hulpspiegel op twee punten van de omtreksrand van de voertuigspiegel wordt vastgezet, en met twee bij het vastzetten van de klembekken op het buitenoppervlak van de voertuigspiegel aangrijpende aanlignokken (3-5,3-6). Het klemblok omvat een klemblokholte (11) aan de zijde van de voertuigspiegel, alsmede een overbruggingsorgaan (12) dat de klemblokholte ter hoogte van de verstelbare klembekken overbrugt en dat is ingericht om tussen de verstelbare klembekken op het buitenoppervlak van de voertuigspiegel en/of de omtreksrand ervan aan te grijpen. Het overbruggingsorgaan wordt gelagerd in twee lagerholtes (16) ter weerszijden van de klemblokholte, het is staafvormig is en bezit een ronde dwarsdoorsnede, en is vervaardigd van een stijve slechts enigermate vervormbare kunststof zoals polyethyleen of polypropyleen.

## Description

The present invention relates to an auxiliary mirror, for instance for use by driving school instructors et cetera, comprising a clamping block with clamping members for mounting upon a peripheral edge of a vehicle mirror, wherein the clamping members comprise adjustable clamping jaws for fixedly mounting the auxiliary mirror onto two points/spots on the peripheral edge of the vehicle mirror, and with two abutting cams/projections, which engage on the outer surface of the vehicle mirror during fastening of the clamping jaws.

Such auxiliary mirrors are generally known, for instance from Dutch patent application 2003077. A second, similar auxiliary mirror is known from Dutch patent application 1039599. NL2003077 discloses an auxiliary mirror having a clamping block with a fixed auxiliary mirror holder. NL1039599 discloses an auxiliary mirror with a clamping block, provided with a loose separate connecting member between the clamping block and the actual auxiliary mirror, which member is rotatable relative to the clamping block.

Object of the present invention is to provide a clamping block, with which clamping of the auxiliary mirror is improved upon the outer surface of the vehicle mirror. In accordance with the present invention an auxiliary mirror is provided of the type stated above in the preamble: an auxiliary mirror comprising a clamping block (or base body) having clamping members for mounting upon the peripheral edge of the vehicle mirror, wherein the clamping members comprise adjustable clamping jaws for fixedly mounting the auxiliary mirror onto two spots on the peripheral edge of the vehicle mirror, and with two abutting cams/projections, which engage on the outer surface of the vehicle mirror when fastening the clamping jaws;
wherein the clamping block comprises a clamping block cavity at the side of the vehicle mirror, and comprises a bridging element, which bridges the clamping block cavity, approximately at the level of the adjustable clamping jaws, and which element is arranged to engage on the outer surface of the vehicle mirror between the adjustable clamping jaws.

The bridging member achieves a better engagement with the outer surface of the vehicle mirror, wherein the bridging member, because it "hangs" (seen from below) above the clamping block cavity, is able to deform at least to some extent in the direction of said clamping block cavity, so that the engagement with the mirror edge is significantly improved, according to experiments performed, because the bridging member adjusts "sets" to the shape of the outer surface of the vehicle mirror during the fastening and tightening of the clamping jaws and, if applicable, during additional tightening afterwards.

Preferably, the bridging member is bearing-mounted in two bearing cavities on either side of the clamping block cavity. Preferably, the bridging member is rod-shaped and possesses a substantially circular/round cross-section. For example, the bridging member is made from a rigid, to some extent deformable, plastic such as polyethylene or polypropylene.

Hereinafter, the invention will be further discussed by means of a description of the figures.
- Figure 1: shows a schematic drawing of an auxiliary mirror according to NL2003077 mounted on a vehicle mirror;
- Figure 2: shows a perspective view of the clamping block from NL2003077;
- Figure 3a-b: show a front view and side view of the clamping block from NL2003077, however, according to the invention, provided with a clamping block cavity and a bridging member;
- Figure 4: shows a side sectional view of a clamping block, which in itself is known from NL1039599, however, according to the invention, provided with a clamping block cavity and a bridging member;
- Figure 5: shows a bottom perspective view of the clamping block according to NL2003077 or NL1039599, provided with a clamping block cavity and a bridging member.

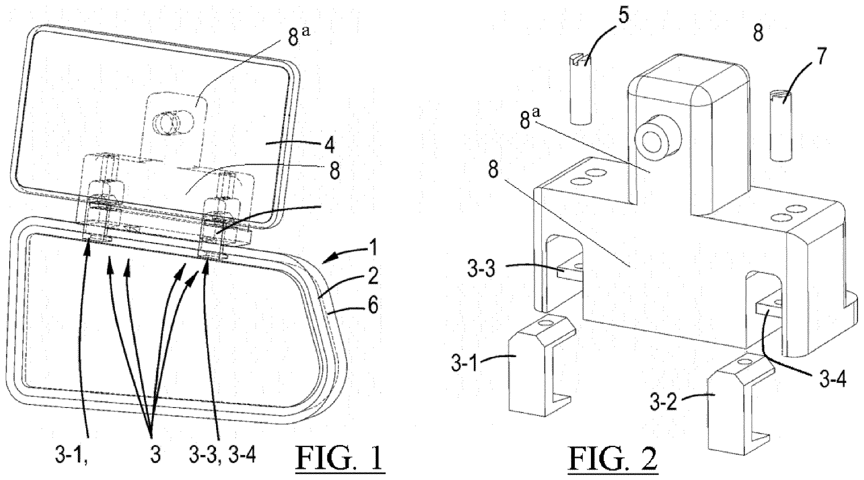

Figure 1 shows a schematic representation of a mirror 1 usually present on a vehicle, the mirror being provided with a peripheral edge 2. An auxiliary mirror 4 is mounted onto said edge by means of a clamping block 8, an auxiliary mirror holder 8a and clamping members 3. For example, the auxiliary mirror is mounted onto the wing mirror available and present on a car that is towing a caravan or a trailer, or onto a wing mirror of a car, which is used for driving lessens. The auxiliary mirror 4 can also be used as a blind-spot mirror.

For mounting the auxiliary mirror 4 onto the vehicle mirror, the clamping members 3 are comprising a number of, in Figure 1 two sets, mutually adjustable clamping jaws 3-1, 3-2 and clamping members 3-3, 3-4, for engagement around the peripheral edge 2 of the vehicle mirror; in this embodiment at two points or spots on the edge. By rotating a clamping bolt 5, the corresponding clamping jaws are fixedly mounted onto the peripheral edge 2. Furthermore in the embodiment shown, the clamping members 3 comprise two abutting projections 3-5 and 3-6 engaging on the outer surface 6 of the vehicle mirror 1. The abutting projections 3-5, 3-6 are mutually spaced apart having a specific mutual distance, and are formed as fixed, for example slopingly/slantingly extending, cams, or as height-adjustable cams. Height adjustment is performed by means of a screw bolt 7 in order to ensure that the cams pressingly abut and engage on the outer surface 6 of the vehicle mirror 1. As a result, a forced (2 x 2 =) four-point support is obtained, which reduces the potential vibration of the auxiliary mirror 4 occurring in various directions.

Possible alternatives of this embodiment are: one set of clamping jaws with each an abutting projection, in frontal view on either sides; or two sets of clamping jaws, there between provided with one abutting projection, in frontal view. When the projections are provided with a greater width, they form abutting ridges. However, said alternatives limit the number of degrees of freedom compared to the above described four-point support, and therefore, in general, will suppress the vibrations less good.

For (technical) reasons as stability and technical manufacture and construction, preferable the different embodiments of the clamping members 3-1,..., 3-6 are included in one and the same clamping block 8. This configuration is shown in the perspective view of Figure 2, and respectively in the front and left side view of the Figures µ3a-b. Furthermore, these Figures show the difference in mutual distance between the sets of clamping jaw with member 3-1/3-3 and 3-2/3-4 and in mutual distance between the abutting projections 3-5 and 3-6.

In particular, the mutual distance between the sets of clamping jaw with member is greater than the mutual distance between the abutting projections. This is aimed at obtaining a stable and vibration-free engagement onto the outer surface 6 by the various abutment and contact points. When the mutual distance between the sets of clamping jaws with members is about 1.5 times as large as the mutual distance between the abutting projections, a very strong trapezoidal basis with virtual diagonals is obtained, of which the lines of force work together in such a way, that in all possible directions, the auxiliary mirror 4 is essentially motionless and rigid, with respect to the vehicle mirror 1, and only moves along with the vehicle.

Preferably, the clamping block 8 is made of a plastic or a lightweight stainless material, such as aluminium.

If desired, the auxiliary mirror 4 may comprise means 9 for coupling to an tension strap, to be positioned around the vehicle mirror 1, which allows for additional tensioning of the abutting points onto the vehicle mirror 1, and for preventing losing the auxiliary mirror 4.

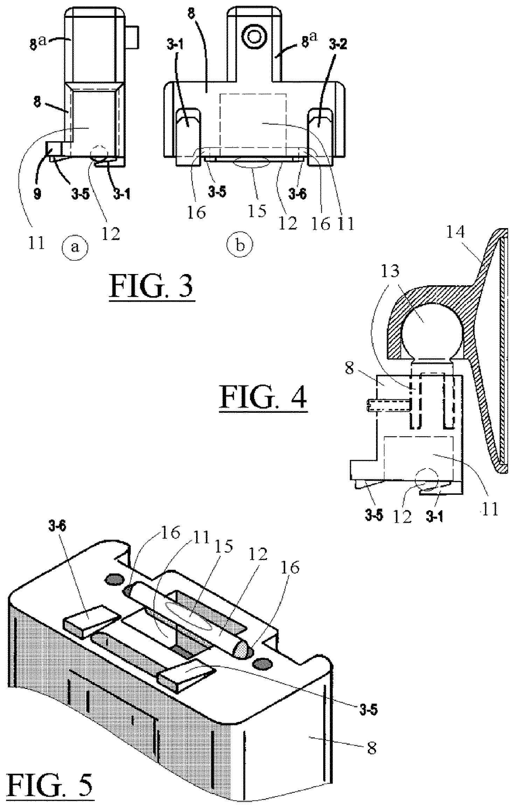

Figures 3a-b show a clamping block 8, which basically is known from NL2003077. Contrary to NL2003077, the clamping block 8 according to the invention is provided with a clamping block cavity 11 and with a bridging member 12. Furthermore, the auxiliary mirror holder 8a and the tension strap portion 9 are shown.

Figure 4 shows a side sectional view of a clamping block, which basically is known from NL1039599. However, contrary to NL1039599, the clamping block according to the invention is provided with a clamping block cavity 11 and a bridging member 12. The clamping block shown in NL1039599 cooperates with a separate, rotary connector 13, located between the clamping block 8 and the auxiliary mirror 14, wherein said mirror is movable and adjustable around the ball-shaped upper end of the connector 13.

Figure 5 shows a bottom perspective view of the clamping block from NL2003077 or from NL1039599, which block is additionally provided with a clamping block cavity 11 and a bridging member 12.

Figures 3a-b, 4, and 5 show clamping blocks 8 for an auxiliary mirror basically being known from the patent documents NL2003077 and NL1039599; the blocks being provided with clamping members 3-1, 3-2, 3-3 and 3-4 (of which only the adjustable members 3-1 and 3-2 are visible in these figures) for mounting the auxiliary mirror on a peripheral edge of a vehicle mirror (see figure 1). The clamping members comprise adjustable clamping jaws 3-1 and 3-2 for fixedly mounting the auxiliary mirror upon two points/spots of the peripheral edge of the vehicle mirror. Furthermore the clamping members comprises two abutting projections 3-5 and 3-6, which engage on the outer surface of the vehicle mirror during fastening of the clamping jaws.

Figures 3a-b, 4, and 5 show clamping blocks 8 comprising a clamping block cavity 11 at their sides facing the vehicle mirror 1 (see Figure 1). Furthermore, the clamping blocks comprise a bridging member 12, which bridges the clamping block cavity 11, approximately at the level of (or approximately on the connecting line of) the adjustable clamping jaws 3-1 and 3-2. The bridging element is being arranged for engaging against the outer surface of the vehicle mirror 1, preferably with its middle portion located between the adjustable clamping jaws 3-1 and 3-2, referred to in Figure 5 as the location with reference number 15, when the clamping jaws 3-1 and 3-2 are drawn upwards and tightened against the bottom of the peripheral edge of the vehicle mirror 1. The bridging member 12 is bearing-mounted in two bearing cavities 16 on either side of the clamping block cavity 11. The bridging member 12 shown is rod-shaped and has a substantially round cross section. Preferably, the bridging member is made of a rigid, but to some extent deformable, plastic such as polyethylene or polypropylene (of which material, moreover, the clamping block 8 and other parts may be made also).

The bridging member 12 achieves a better engagement with the outer surface of the vehicle mirror 1, wherein the bridging member 12, because it "hangs" (as seen from below, as shown in Figure 5) above the clamping block cavity 11, is able to deform to some extent in the direction of said clamping block cavity, so that the engagement with the mirror edge is significantly improved, as revealed by extensive experiments, since the bridging member 12 adjusts ("sets", abuttingly lays against the outer surface) to the shape of the outer surface of the vehicle mirror 1 (and/or of the peripheral edge 2) during tightening and fastening of the clamping jaws 3-1 and 3-2 and, if necessary, during additional tightening thereof afterwards.

## Claims

1. Auxiliary mirror (4, 14) comprising a clamping block (8) with clamping members for mounting onto a vehicle mirror (1) provided with a peripheral edge (2),
the clamping members comprising adjustable clamping jaws (3-1, 3-2) for fixedly mounting the auxiliary mirror onto two spots of the peripheral edge of the vehicle mirror, and
wherein the clamping block is provided with two abutting projections (3-5, 3-6), which engage on the outer surface of the vehicle mirror when the clamping jaws are fastened, and
wherein the clamping block comprises a clamping block cavity (11) on the side of the vehicle mirror, and comprises a bridging member (12), which bridges the clamping block cavity (11) approximately at the level of the adjustable clamping jaws, the bridging member being arranged to engage on the outer surface of the vehicle mirror and/or its peripheral edge, substantially between the adjustable clamping jaws.

2. Auxiliary mirror according to claim 1, wherein the bridging element is bearing-mounted in two bearing cavities (16) on either side of the clamping block cavity.

3. Auxiliary mirror according to claim 1 or 2, wherein the bridging element is rod-shaped and has a substantially round cross-section.

4. Auxiliary mirror according to one of the preceding claims, wherein the bridging member is manufactured from a rigid, but to some extent deformable, plastic such as polyethylene or polypropylene.
